# EUROPEAN PATENT APPLICATION

(11) **EP 4 848 875 A1**
(43) Date of publication of application: **02.12.2026**
(21) Application number: 24919849.0
(22) Date of filing: 05.11.2024
(51) Int. Cl.: H04W 76/10

(54) **DEVICE CONNECTION PROCESSING METHOD AND APPARATUS, AND ELECTRONIC DEVICE AND STORAGE MEDIUM**

(30) Priority: 24.01.2024 CN 202410104675
(71) Applicant: Shenzhen Falcon Network Media Co., Ltd., Shenzhen, Guangdong 518000 (CN)
(72) Inventor: LIU, Jianshuang, Hong Kong Cooperation Zone Shenzhen, Guangdong 518000 (CN)
(74) Representative: Murgitroyd & Company
(86) International application number: PCT/CN2024/129969
(87) International publication number: WO 2025/156769

(57) **Abstract**

Provided in the present application are a device connection processing method and apparatus, and an electronic device and a storage medium. The method comprises: receiving a device discovery request sent by a sending end, and on the basis of the device discovery request, generating request response information; on the basis of a sending end identifier corresponding to the device discovery request, determining whether the sending end shields the request response information; if the sending end shields the request response information, updating the request response information on the basis of the sending end identifier and a preset shielding rule; and sending the updated request response information to the sending end corresponding to the sending end identifier, so as to establish a connection with the sending end. When a sending end shields a request response information, the request response information is dynamically updated, and an attempt is made to establish a connection with the sending end on the basis of the updated request response information, thus avoiding the situation where a receiving end device cannot be discovered due to being shielded and improving the success rate of device connection.

## Description

This application claims priority from the China patent application filed on January 24, 2024, with application number 2024101046754, and titled "DEVICE CONNECTION PROCESSING METHOD AND APPARATUS, AND ELECTRONIC DEVICE AND STORAGE MEDIUM", the entire content of which is incorporated herein by reference.

### TECHNICAL FIELD

The present disclosure relates to the field of communication technologies, and more specifically, to a device connection processing method, an apparatus, an electronic device, and a storage medium.

### BACKGROUND

With the development of communication technologies, data transmission between devices has become increasingly widespread. Inevitably, data transmission between devices requires the establishment of a communication connection. During the connection process, a device at one end of the data transmission (e.g., a sending end) typically discovers the device at the other end (e.g., a receiving end) to establish the connection. However, during this device discovery process, the sending end may actively block responses, preventing the receiving end from being discovered and thus reducing the device connection success rate.

### TECHNICAL PROBLEM

The present disclosure provides a device connection processing method, an apparatus, an electronic device, and a storage medium, which aim to solve the problem of a reduced device connection success rate caused by a receiving end device being undiscoverable.

### SUMMARY

In one aspect, the present disclosure provides a device connection processing method, comprising:
receiving a device discovery request sent by a sending end, and generating request response information according to the device discovery request;
determining, according to a sending end identifier corresponding to the device discovery request, whether the sending end blocks the request response information;
if the sending end blocks the request response information, updating the request response information according to the sending end identifier and a preset blocking rule; and
sending the updated request response information to the sending end corresponding to the sending end identifier, to connect with the sending end.

In a possible implementation of the present disclosure, the determining, according to the sending end identifier corresponding to the device discovery request, whether the sending end blocks the request response information comprises: obtaining the sending end identifier corresponding to the device discovery request;
searching the preset blocking rule to obtain a target blocking relationship group comprising the sending end identifier, wherein the target blocking relationship group comprises a target blocking field corresponding to the sending end identifier, and a field type corresponding to a blocking field value; and
if the request response information comprises the target blocking field value, determining that the sending end blocks the request response information.

In a possible implementation of the present disclosure, 5.the preset blocking rule comprises at least one non-blocking relationship group, and one of the non-blocking relationship group comprises an end identifier, the field type, and a non-blocking field value; and
the if the sending end blocks the request response information, updating the request response information according to the sending end identifier and a preset blocking rule comprises:
if the sending end blocks the request response information, searching the non-blocking relationship group;
if a non-blocking field value matching the sending end identifier exists in the non-blocking relationship group, determining a target non-blocking field value according to a field type of the non-blocking field value, and setting the target non-blocking field value as an update field value; and
updating the target blocking field value in the request response information to the update field value corresponding to the field type, to obtain the updated request response information.

In a possible implementation of the present disclosure, 6.after the searching the non-blocking relationship group if the sending end blocks the request response information, the method further comprises:
when the non-blocking field value corresponding to the sending end identifier in the preset blocking rule is not identified, randomly generating a target field corresponding to each blocking field value in the request response information, and updating the target field value in the request response information.

In a possible implementation of the present disclosure, after the sending the updated request response information to the sending end corresponding to the sending end identifier, the method comprises:
if feedback information corresponding to the updated request response information from the sending end is not received, randomly generating an update field value according to a field type of a field in the request response information; and
sending the request response information updated according to the update field value to the sending end corresponding to the sending end identifier.

In a possible implementation of the present disclosure,after the sending the updated request response information to the sending end corresponding to the sending end identifier, the method further comprises:
if feedback information corresponding to the updated request response information from the sending end is received, setting the sending end identifier, and a field type and an update field value corresponding to the updated request response information, as a non-blocking relationship group, and updating the preset blocking rule with the non-blocking relationship group; and
if feedback information corresponding to the updated request response information from the sending end is not received, setting the sending end identifier, and the field type and the update field value corresponding to the updated request response information, as a blocking relationship group, and updating the preset blocking rule with the blocking relationship group, wherein the blocking relationship group comprises a target blocking relationship group and the sending end identifier.

In a possible implementation of the present disclosure, after the sending the updated request response information to the sending end corresponding to the sending end identifier to connect with the sending end, the method comprises:
obtaining video address information and a video playback time point sent by the sending end; and
performing screen mirroring playback for a video corresponding to the video address information according to the video playback time point.

In a second aspect, the present disclosure provides a device connection processing apparatus, comprising:
a receiving module, configured to receive a device discovery request sent by a sending end, and generating request response information according to the device discovery request;
a determining module, configured to determine, according to a sending end identifier corresponding to the device discovery request, whether the sending end blocks the request response information;
an updating module, configured to, if the sending end blocks the request response information, updating the request response information according to the sending end identifier and a preset blocking rule; and
a sending module, configured to send the updated request response information to the sending end corresponding to the sending end identifier, to connect with the sending end.

In a third aspect, the present disclosure provides an electronic device, comprising:
one or more processors;
a memory; and
one or more application programs, wherein the one or more application programs are stored in the memory and configured to be executed by the one or more processors to implement the steps of the device connection processing method according to any of the embodiments.

In a fourth aspect, the present disclosure provides a computer-readable storage medium on which a computer program is stored, wherein the computer program is loaded by a processor to execute the steps of the device connection processing method according to any of the embodiments.

### BENEFICIAL EFFECTS

The present disclosure provides a device connection processing method, an apparatus, an electronic device, and a storage medium. The method involves receiving a device discovery request from a sending end and generating request response information; determining whether the sending end blocks the request response information based on a sending end identifier; if blocking is detected, updating the request response information based on the sending end identifier and a preset blocking rule; and sending the updated information to the sending end to establish a connection. By performing a blocking determination on the request response information during the device discovery phase, and when blocking is detected, dynamically updating the information, a renewed attempt to establish a connection can be made. This dynamic updating of the response information when it is being blocked by the sending end helps to overcome the issue of the receiving device being undiscoverable, thereby improving the overall success rate of device connections.

### BRIEF DESCRIPTION OF THE DRAWINGS

To more clearly illustrate the technical solutions in the embodiments of the present disclosure, the accompanying drawings required for describing the embodiments will be briefly introduced below. It is apparent that the drawings in the following description are merely some embodiments of the present disclosure, and other drawings can be obtained by a person of ordinary skill in the art from these drawings without creative effort.
FIG. 1 is a schematic diagram of a scenario of a device connection processing method provided in an embodiment of the present disclosure;
FIG. 2 is a schematic flowchart of an embodiment of a device connection processing method provided in an embodiment of the present disclosure;
FIG. 3 is a schematic flowchart of another implementation of a device connection processing method provided in an embodiment of the present disclosure;
FIG. 4 is a schematic flowchart of one implementation for updating the request response information in a device connection processing method provided in an embodiment of the present disclosure;
FIG. 5 is a schematic flowchart of another implementation of a device connection processing method provided in an embodiment of the present disclosure;
FIG. 6 is a schematic flowchart of one implementation of a device connection processing method provided in an embodiment of the present disclosure;
FIG. 7 is a schematic flowchart of another implementation of a device connection processing method provided in an embodiment of the present disclosure;
FIG. 8 is a schematic structural diagram of an embodiment of a device connection processing apparatus provided in an embodiment of the present disclosure;
FIG. 9 is a schematic structural diagram of an embodiment of an electronic device provided in an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, not all of them. Based on the embodiments in the present disclosure, all other embodiments obtained by a person of ordinary skill in the art without making creative efforts shall fall within the protection scope of the present disclosure.

In the description of the present disclosure, it should be understood that terms such as "center", "longitudinal", "transverse", "length", "width", "thickness", "upper", "lower", "front", "rear", "left", "right", "vertical", "horizontal", "top", "bottom", "inner", "outer", etc., indicate orientations or positional relationships based on the orientations or positional relationships shown in the drawings. They are merely for the convenience of describing the present disclosure and simplifying the description, and do not indicate or imply that the referred-to device or element must have a specific orientation or be constructed and operated in a specific orientation, and therefore cannot be construed as a limitation on the present disclosure. In addition, the terms "first" and "second" are used for descriptive purposes only and cannot be construed as indicating or implying relative importance or implicitly indicating the number of technical features indicated. Thus, a feature defined with "first" or "second" may explicitly or implicitly include one or more of said features. In the description of the present disclosure, "a plurality of" means two or more, unless otherwise explicitly and specifically defined.

In the embodiments of the present disclosure, "and/or" describes the association of related objects, indicating that three types of relationships can exist. For example, A and/or B can mean: A exists alone, A and B exist simultaneously, or B exists alone. In addition, the character "/", unless otherwise specified, generally indicates an "or" relationship between the associated objects.

In the present disclosure, the term "exemplary" is used to mean "serving as an example, instance, or illustration". Any embodiment described as "exemplary" herein is not necessarily to be construed as preferred or advantageous over other embodiments. The following description is provided to enable any person skilled in the art to make and use the invention. In the following description, details are set forth for purposes of explanation. It should be understood that a person of ordinary skill in the art can recognize that the present disclosure can be implemented without using these specific details. In other instances, well-known structures and processes are not described in detail to avoid obscuring the description of the present disclosure with unnecessary details. Therefore, the present disclosure is not intended to be limited to the embodiments shown, but is to be accorded the widest scope consistent with the principles and features disclosed herein.

Embodiments of the present disclosure provide a device connection processing method, an apparatus, a device, and a computer-readable storage medium (the computer-readable storage medium may be abbreviated as storage medium throughout the text), which are described in detail below.

The device connection processing method in the embodiments of the present disclosure is implemented by a device connection processing apparatus, which is located in an electronic device. The electronic device is provided with one or more processors, a memory, and one or more application programs, wherein the one or more application programs are stored in the memory and configured to be executed by the processor to implement the device connection processing method. The electronic device may be a terminal, for example, a mobile phone or a tablet computer. The electronic device may also be a server, or a service cluster composed of multiple servers.

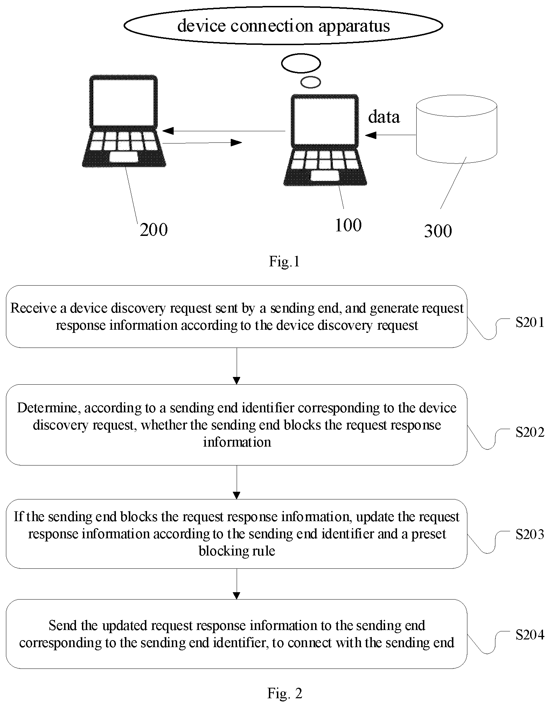

As shown in FIG. 1, which is a schematic diagram of a scenario for a device connection processing method according to an embodiment of the present disclosure, the device connection scenario includes an electronic device 100 (in which a device connection processing apparatus is integrated). A computer-readable storage medium corresponding to device connection runs in the electronic device 100 to execute the steps of device connection.

It should be understood that the electronic device, or the apparatus included in the electronic device, in the scenario of the device connection processing method shown in FIG. 1 does not constitute a limitation on the embodiments of the present disclosure. That is, the number and types of devices included in the scenario, or the number and types of apparatuses included in each device, do not affect the overall implementation of the technical solutions in the embodiments of the present disclosure, and can be considered equivalent replacements or derivations of the claimed technical solutions.

The electronic device 100 in the embodiments of the present disclosure is mainly configured to: receive a device discovery request sent by a sending end, and obtain request response information and a sending end identifier corresponding to the device discovery request; if the sending end blocks the request response information, update the request response information according to the sending end identifier and a preset blocking rule; and send the updated request response information to the sending end corresponding to the sending end identifier to connect with the sending end.

In the embodiments of the present disclosure, the electronic device 100 may be an independent electronic device, or an electronic device network or electronic device cluster composed of electronic devices. For example, the electronic device 100 described in the embodiments of the present disclosure includes but is not limited to a computer, a network host, a single network electronic device, a set of multiple network electronic devices, or a cloud electronic device composed of multiple electronic devices. The cloud electronic device is composed of a large number of computers or network electronic devices based on Cloud Computing.

A person skilled in the art can understand that the application environment shown in FIG. 1 is merely one application scenario related to the solution of the present application and does not constitute a limitation on the application scenarios of the solution of the present application. Other application environments may also include more or fewer electronic devices than shown in FIG. 1, or different network connection relationships for the electronic devices. For example, although FIG. 1 only shows one electronic device, it can be understood that a scenario for the device connection processing method may also include one or more other electronic devices; the specific number is not limited herein. The electronic device 100 may also include a memory for storing data, for example, storing captured image information.

Furthermore, in the scenario of the device connection processing method of the present application, the electronic device 100 may be provided with a display device, or the electronic device 100 may not be provided with a display device and may be communicatively connected to an external display device. Specifically, the scenario also includes a sending end device 200 corresponding to the electronic device 100, where the sending end device 200, acting as a sending end, initiates a device discovery request. The electronic device 100 can access a backend database 300. The backend database 300 can be in the local memory of the electronic device or can be located in the cloud. The backend database 300 stores information related to device connection, for example, an initial image or preset filtering parameters.

It should be noted that the schematic diagram of the scenario for the device connection processing method shown in FIG. 1 is merely an example. The scenario of the device connection processing method described in the embodiments of the present invention is intended to more clearly explain the technical solution of the embodiments of the present invention and does not constitute a limitation on the technical solution provided by the embodiments of the present invention.

Based on the above scenario of the device connection processing method, an embodiment of a device connection processing method is proposed.

As shown in FIG. 2, which is a schematic flowchart of a device connection processing method according to an embodiment of the present application, the device connection processing method includes steps S201-S204:

S201. Receive a device discovery request sent by a sending end, and generate request response information according to the device discovery request.

The device discovery request is a request sent by the sending end during the device discovery phase. It can be understood that in some data transmission scenarios, the sending end can be the sending end in the data transmission scenario. When data transmission is needed, the sending end initiates a device discovery request to be received by the receiving end. Furthermore, the receiving end is the data receiving end in the data transmission scenario. It can be understood that the sending end and the receiving end can be electronic devices such as mobile phones, computers, or tablets.

The request response information is response information that responds to the device discovery request, where the request response information includes a protocol and a service information file of the receiving end. It can be understood that data transmission between the sending end and the receiving end is implemented through different data transmission protocols, and accordingly, the device discovery request and the format and content of the device discovery request may also be different. For example, the data transmission protocol may include a DLNA protocol, an AirPlay protocol, a Miracast protocol, etc. This is not specifically limited in the present application.

For example, in one embodiment of the present application, the sending end is a DLNA protocol screen mirroring source device, and the receiving end is a DLNA protocol screen mirroring sink device. The DLNA protocol screen mirroring source device and the DLNA protocol screen mirroring sink device implement the screen mirroring function, i.e., screen mirroring data transmission, through the DLNA protocol. That is, it can be understood that the request response information includes an SSDP request response and a communication protocol.

Specifically, SSDP is the Simple Service Discovery Protocol. The SSDP request response is response information for the SSDP request and is an M-SEARCH response. It can send an "ssdp:discover" (SSDP request response) message using the M-SEARCH method to an SSDP port at a specific multicast address.

Specifically, the communication protocol includes the SOAP communication protocol. SOAP (Simple Object Access Protocol) is a simple XML-based protocol that allows applications to exchange information via HTTP in a decentralized or distributed environment. The SOAP communication protocol includes the service information file of the receiving end.

It can be understood that the sending end can discover and search for service devices via HTTPMU, which is HTTP Multicast over UDP. The Hypertext Transfer Protocol (HTTP) is a simple request-response protocol that specifies what kind of messages the sending end may send to the receiving end and what kind of responses may be obtained.

Specifically, in the DLNA protocol, device roles can generally be divided into two types: a sending end (control point, i.e., a DLNA protocol screen mirroring source device) and a receiving end (i.e., a DLNA protocol screen mirroring sink device). The DLNA protocol implements device discovery capability through the SSDP protocol based on HTTPMU. The sending end obtains the device description file and service description file of the receiving end through the SOAP protocol. SOAP is a remote procedure call method based on XML that uses HTTP to send commands and receive data. During the DLNA device discovery phase, the sending end requests the device description file and service description file from the receiving end via SOAP, thereby learning the device information and service capabilities of the receiving end. That is, the sending end sends the device discovery request by repeatedly initiating device discovery requests to the receiving end within a local area network in a regular manner, and the device discovery request carries a sending identifier corresponding to the sending end.

S202. Determine, according to a sending end identifier corresponding to the device discovery request, whether the sending end blocks the request response information.

The sending end identifier is a unique identifier used to identify the sending end. For example, the sending end identifier can be a sending end device ID, a sending end communication identifier, etc.

Specifically, in one embodiment of the present application, after the receiving end receives the device discovery request sent by the sending end and obtains the request response information and the sending end identifier corresponding to the device discovery request, it can be determined whether the sending end blocks the receiving end by sending the request response information to the sending end corresponding to the sending end identifier and determining whether the sending end blocks the request response information. Alternatively, in some other embodiments, it can also be determined whether the sending end blocks the request response information sent by the receiving end (i.e., whether the sending end blocks the receiving end) by searching a preset blocking rule to determine whether the request response information contains a blocked field value. If it is determined that the sending end blocks the request response information, the request response information is updated according to the sending end identifier and the preset blocking rule.

S203. If the sending end blocks the request response information, update the request response information according to the sending end identifier and a preset blocking rule.

The preset blocking rule is used for determining which fields in the request response information are not blocked. It can be understood that the preset blocking rule can be created based on device discovery information from historical data transmission processes, or can be obtained through user presets. This is not specifically limited in the present application.

Specifically, the particular manner of implementing the update to the request response information is not specifically limited in the present application. For example:

In some embodiments of the present application, updated request response information is obtained by identifying a non-blocked field corresponding to the sending end identifier in the preset blocking rule, and replacing a blocked field value in the request response information with the corresponding non-blocked field value.

In some other embodiments of the present application, a non-blocked field value corresponding to the sending end identifier in the preset blocking rule is identified. If no non-blocked field value corresponding to the sending end identifier is identified in the preset blocking rule, a target field corresponding to each blocked field value in the request response information is randomly generated, and the request response information is updated with the target field.

S204. Send the updated request response information to the sending end corresponding to the sending end identifier, to connect with the sending end.

Specifically, after the request response information is updated, the updated request response information is sent to the sending end that sent the device discovery request. Furthermore, the sending end creates a connection with the receiving end based on the request response information. For example, in a DLNA protocol screen mirroring scenario, the receiving end sends the updated M-SEARCH response to the sending end by using the M-SEARCH method to an SSDP port at a specific multicast address.

In this solution, a determination of whether the sending end blocks the request response information is made during the device discovery phase. If the sending end blocks the request response information, the request response information is updated according to the sending end identifier and a preset blocking rule, thereby adaptively adjusting the request response information. A connection with the sending end is then established based on the updated request response information. This enhances the device connection success rate.

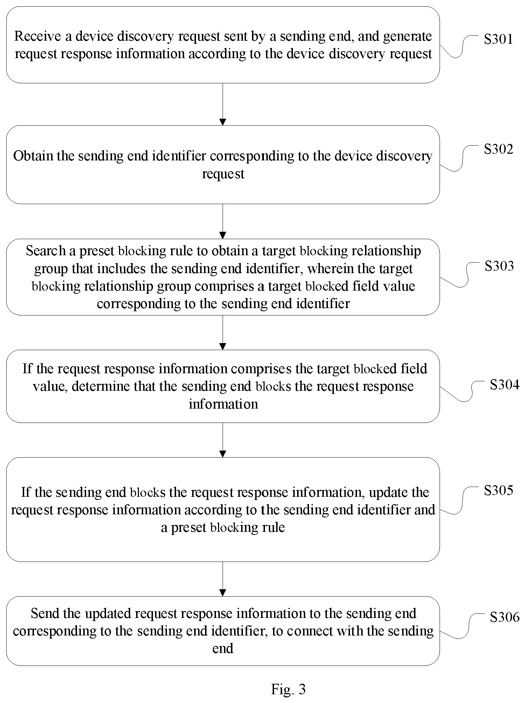

Furthermore, on the basis of the above embodiment, reference is made to FIG. 3. FIG. 3 is a schematic flowchart of another embodiment of a device connection processing method provided by the present application, which specifically includes steps S301-S306:

S301. Receive a device discovery request sent by a sending end, and generate request response information according to the device discovery request.

For the specific implementation of step S301, refer to the description in any of the preceding embodiments.

S302. Obtain the sending end identifier corresponding to the device discovery request.

Specifically, the sending end identifier can be carried in the device discovery request, and the receiving end extracts the sending end identifier corresponding to the sending end by parsing the device discovery request.

S303. Search a preset blocking rule to obtain a target blocking relationship group that includes the sending end identifier, wherein the target blocking relationship group comprises a target blocked field corresponding to the sending end identifier.

Specifically, in this embodiment of the present application, the preset blocking rule includes a blacklist composed of at least one blocking relationship group, where a blocking relationship group includes at least one (sending) end identifier, a field type, and at least one blocked field value corresponding to each field type.

The field type is a type categorized according to the content represented by the blocked field value. For example, if the blocked field represents a manufacturer, the field type is a manufacturer type. That is, the blocked field is a computer field that represents the manufacturer and can represent the manufacturer's number, name, etc.

For example, in one embodiment of the present application, after the receiving end receives the device discovery request sent by the sending end and obtains the sending end identifier, it searches the blacklist in the preset blocking rule. If a target blocking relationship group including the sending end identifier exists in the blacklist, the target blocked field value and the field type corresponding to the target blocked field value are obtained from the target blocking group. A matching search is then performed on the fields in the request response information based on the target blocked field value and its corresponding field type.

S304. If the request response information comprises the target blocked field value, determine that the sending end blocks the request response information.

Furthermore, after the receiving end searches the preset blocking rule according to the sending end identifier and obtains the target blocking relationship group corresponding to the sending end identifier, it compares the field in the request response information that corresponds to the field type of the target blocked field in the target blocking relationship group with the corresponding target blocked field value. If at least one field in the request response information is identical to the target blocked field, it is determined that the sending end blocks the request response information.

S305. If the sending end blocks the request response information, update the request response information according to the sending end identifier and a preset blocking rule.

S306. Send the updated request response information to the sending end corresponding to the sending end identifier, to connect with the sending end.

For the specific implementation of steps S305-S306, refer to the description in any of the preceding embodiments.

This solution determines that the sending end blocks the request response information by using a preset blocking rule, which saves the step of sending the request response information to the sending end for a blocking determination, thereby improving data processing efficiency.

It can be understood that in some embodiments of the present application, a blocking determination can also be made by sending the request response information to the sending end and determining whether feedback for the request response information is received from the sending end. This is not specifically limited in the present application.

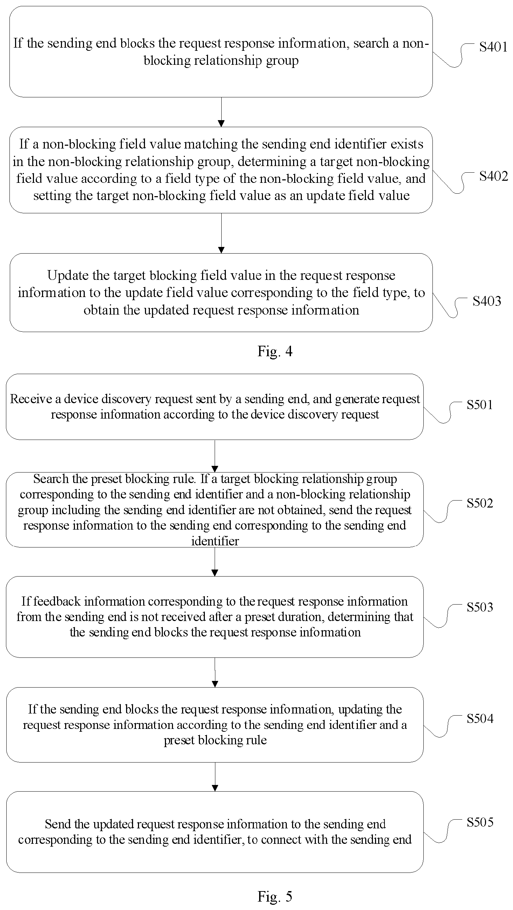

Furthermore, on the basis of the above embodiment, reference is made to FIG. 4. FIG. 4 is a schematic flowchart of one embodiment for updating the request response information in a device connection processing method provided by the present application, which specifically includes steps S401-S403:

S401. If the sending end blocks the request response information, search a non-blocking relationship group.

Specifically, in this embodiment, the preset blocking rule includes at least one non-blocking relationship group. A non-blocking relationship group includes an end identifier, a field type, and a non-blocking field value. The end identifier is the identifier of a sending end, the field type has the same meaning as described previously, and the non-blocking field value is a field that will not be blocked by the sending end (corresponding to the end identifier) for the given field type. For example, if the field type is manufacturer type, the blocked field value is A, and the non-blocking field value is B.

Specifically, in this embodiment of the present application, after the receiving end determines that the sending end blocks the request response information, it searches the non-blocking relationship group in the preset blocking rule according to the sending end identifier corresponding to the device discovery request.

S402. If a non-blocking field value matching the sending end identifier exists in the non-blocking relationship group, determining a target non-blocking field value according to a field type of the non-blocking field value, and setting the target non-blocking field value as an update field value.

Furthermore, in one embodiment of the present application, after the non-blocking relationship group in the preset blocking rule is searched according to the sending end identifier corresponding to the device discovery request, if a target non-blocking relationship group including the sending end identifier exists in the non-blocking relationship group, a target non-blocking field value is obtained from the target non-blocking relationship group. The field type of this target non-blocking field value is the same as the field type of the blocked target field in the request response information, and this target non-blocking field is used as the update field value.

S403. Update the target blocking field value in the request response information to the update field value corresponding to the field type, to obtain the updated request response information.

Further, after the receiving end obtains the update field value, the blocking field value corresponding to the same field type in the request response information is replaced with the update field value to obtain the updated request response information.

Optionally, the non-blocking relationship group may be stored in a tabular format to form a whitelist.

In this solution, the request response information is updated by using the preset non-blocking relationship group, thereby improving the update efficiency of the request response information.

Furthermore, on the basis of the above embodiment, reference is made to FIG. 5, which is a schematic flowchart of another embodiment of a device connection processing method provided by an embodiment of the present application, specifically including steps S501-S505:

S501. Receive a device discovery request sent by a sending end, and generate request response information according to the device discovery request.

Specifically, for the specific implementation of step S501, reference may be made to the description in any of the embodiments.

S502. Search the preset blocking rule. If a target blocking relationship group corresponding to the sending end identifier and a non-blocking relationship group including the sending end identifier are not obtained, send the request response information to the sending end corresponding to the sending end identifier.

Specifically, in the technical solution of the present application, the preset blocking rule includes the blocking relationship group and the non-blocking relationship group described in the above embodiments. After the receiving end receives the device discovery request sent by the sending end and obtains the request response information and the sending end identifier corresponding to the device discovery request, the receiving end searches the preset blocking rule to determine whether the preset blocking rule includes a blocking relationship group and a non-blocking relationship group for the sending end identifier corresponding to the sent device discovery request. If a target blocking relationship group corresponding to the sending end identifier and a non-blocking relationship group including the sending end identifier are not obtained, it indicates that no information corresponding to the sending end identifier is preset in the preset blocking rule. At this time, it cannot be determined based on the preset blocking rule whether the sending end blocks the request response information, so the request response information is sent directly to the sending end corresponding to the sending end identifier for determination.

In some other embodiments of the present application, the preset blocking rule is searched. If the target blocking relationship group corresponding to the sending end identifier is not obtained, but a target non-blocking relationship group including the sending end identifier exists, the field of the corresponding field type in the request response information is directly updated according to the target non-blocking relationship group to avoid a wasteful trial-and-error process. After being updated, the information is sent directly to the receiving end, and step S503 is then performed.

In some other embodiments of the present application, when the preset blocking rule is searched, if the target blocking relationship group corresponding to the sending end identifier is not obtained, the non-blocking relationship group is not searched. Instead, the request response information is sent directly to the sending end corresponding to the sending end identifier, and step S503 is then performed.

S503. If feedback information corresponding to the request response information from the sending end is not received after a preset duration, determining that the sending end blocks the request response information.

Specifically, if no feedback information for the request response information is received from the sending end within a preset duration, it indicates that the sending end has not processed the request response information, and thus it is determined that the sending end has blocked the request response information.

Optionally, in this embodiment, if the target blocking relationship group corresponding to the sending end identifier is not obtained, the request response information is sent to the sending end, and no feedback is received, then the potentially blocked field types and fields are extracted from the request response information. These fields are designated as blocking fields and are associated with the field types and the sending end identifier to generate a blocking relationship group. This group is then used to update the preset blocking rule for searching in subsequent communications. Optionally, the potentially blocked field types can be preset. Alternatively, existing field types in the preset blocking rule can be used as the potentially blocked field types to perform field extraction on the request response information, thereby achieving real-time updates of the preset blocking rule.

S504. If the sending end blocks the request response information, updating the request response information according to the sending end identifier and a preset blocking rule.

S505. Send the updated request response information to the sending end corresponding to the sending end identifier, to connect with the sending end.

Specifically, for the specific implementation of steps S504-S505, reference may be made to the description in any of the above embodiments.

Specifically, on the basis of the above embodiment, the present application also provides a specific implementation solution for updating the request response information according to the sending end identifier and the preset blocking rule, which specifically includes the steps of:
(1) if the sending end blocks the request response information, searching the non-blocking relationship group;
(2) if a non-blocking field value matching the sending end identifier exists in the non-blocking relationship group, determining a target non-blocking field value according to a field type of the non-blocking field value, and setting the target non-blocking field value as an update field value; and
(3) updating the target blocking field value in the request response information to the update field value corresponding to the field type, to obtain the updated request response information.

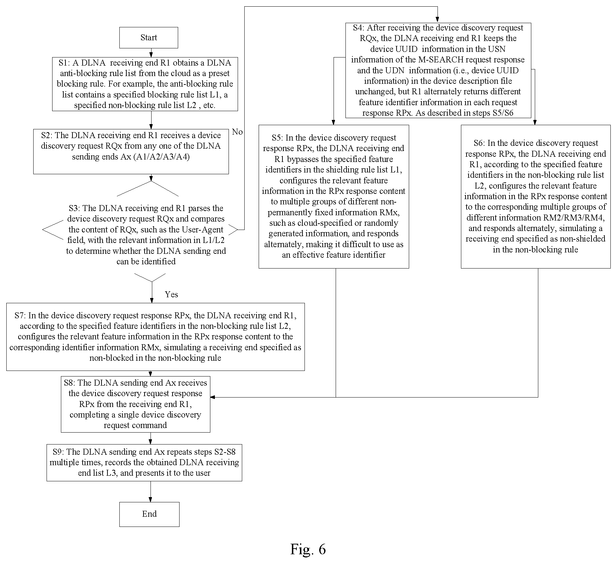

Specifically, reference is made to FIG. 6, which is a schematic flowchart of one embodiment of a device connection processing method provided by the present application. In this embodiment of the present application, the sending end feature identifier can be information such as the User-Agent of the sending end, and the receiving end feature identifier can be information such as the SERVER information in an M-SEARCH response or the manufacturer information in a device description file.

S1: A Digital Living Network Alliance (DLNA) receiving end R1 obtains a DLNA anti-blocking rule list from the cloud as a preset blocking rule. For example, the anti-blocking rule list contains a specified blocking rule list L1 (L1 is the blacklist in the above embodiment), a specified non-blocking rule list L2 (L2 is the whitelist in the above embodiment), etc.

Specifically, in one embodiment of the present application, the blocking relationship group and the non-blocking relationship group in the anti-blocking rule list are stored integrated in one table. For example:

| User-Agent (sending end identifier) | Rule type | Receiving end feature identifier specified in the rule | Non-permanently fixed receiving end feature information for bypassing the specified blocking rule |
|---|---|---|---|
| * | block | RM1 | RMx |
| * | Do not block | RM2 | RMx |
| * | Do not block | RM3 | RMx |
| SM4 | Do not block | RM4 | * |

Wherein, * represents any sending end identifier, and RMx represents any update field value.

S2: The DLNA receiving end R1 receives a device discovery request RQx from any one of the DLNA sending ends Ax (A1/A2/A3/A4).

S3: The DLNA receiving end R1 parses the device discovery request RQx and compares the content of RQx, such as the User-Agent field, with the relevant information in L1/L2 to determine whether the DLNA sending end can be identified.

If the sending end Ax cannot be identified in step S3 (that is, if the target blocking relationship group corresponding to the sending end identifier and the non-blocking relationship group including the sending end identifier are not obtained, then the request response information is sent to the sending end corresponding to the sending end identifier), then steps S4-S6 are performed:

S4: After receiving the device discovery request RQx, the DLNA receiving end R1 keeps the device Unique Universal Identifier (UUID) information in the Unique Service Name (USN) information of the M-SEARCH request response and the Unique Device Name (UDN) information (i.e., device UUID information) in the device description file unchanged, but R1 alternately returns different feature identifier information in each request response RPx. As described in steps S5/S6:

S5: In the device discovery request response RPx, the DLNA receiving end R1 bypasses the specified feature identifiers in the blocking rule list L1, configures the relevant feature information in the RPx response content to multiple groups of different non-permanently fixed information RMx, such as cloud-specified or randomly generated information, and responds alternately, making it difficult to use as an effective feature identifier. Specifically, if no feedback information for the updated request response information is received from the sending end, an update field value is randomly generated according to the field type of a field in the request response information. Optionally, the field type in the request response information can be a field type that already exists in the preset blocking rule. The request response information, updated with the update field value, is sent to the sending end corresponding to the sending end identifier until the updated request response information is no longer blocked, at which point the random generation of the update field value is stopped.

S6: In the device discovery request response RPx, the DLNA receiving end R1, according to the specified feature identifiers in the non-blocking rule list L2, configures the relevant feature information in the RPx response content to the corresponding multiple groups of different information RM2/RM3/RM4, and responds alternately, simulating a receiving end specified as non-blocked in the non-blocking rule (that is, a target non-blocking field value is determined according to the field type of the non-blocking field and is set as an update field value. Optionally, the non-blocking field values corresponding to each field type in the non-blocking relationship group may be used sequentially as the update field value to update the request response information, and the updated request response information is sent to the sending end until it is no longer blocked).

If the sending end Ax can be identified in step S3, then step S7 is performed:

S7: In the device discovery request response RPx, the DLNA receiving end R1, according to the specified feature identifiers in the non-blocking rule list L2, configures the relevant feature information in the RPx response content to the corresponding identifier information RMx, simulating a receiving end specified as non-blocked in the non-blocking rule (that is, if a non-blocking field value matching the sending end identifier exists in the non-blocking relationship group, a target non-blocking field value is determined according to the field type of the non-blocking field value and is set as the update field value, thereby obtaining the updated request response information).

S8: The DLNA sending end Ax receives the device discovery request response RPx from the receiving end R1, completing a single device discovery request command.

S9: The DLNA sending end Ax repeats steps S2-S8 multiple times, records the obtained DLNA receiving end list L3, and presents it to the user.

The above is the specific process of the technical solution for DLNA protocol anti-blocking.

Wherein, the list L3 is used to display connectable receiving ends to the user, i.e., the list L3 includes at least one connected receiving end.

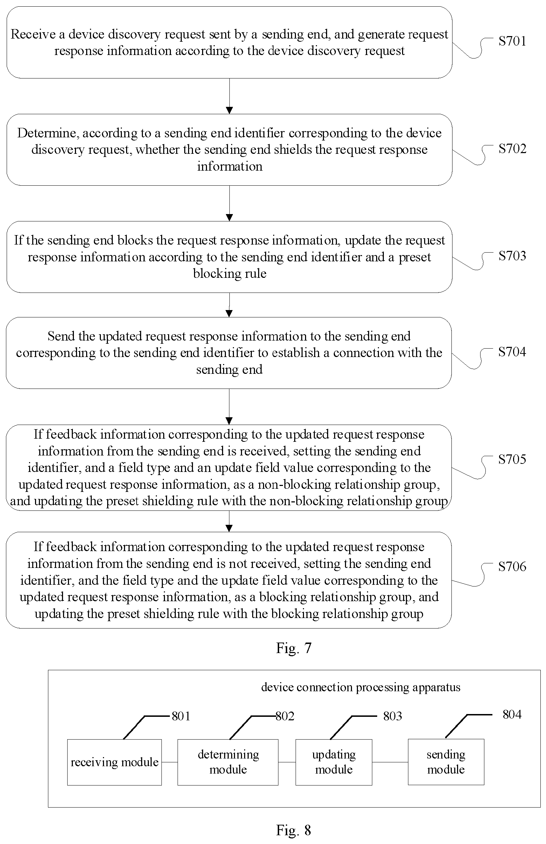

Furthermore, on the basis of the above embodiment, reference is made to FIG. 7, which is a schematic flowchart of another embodiment of a device connection processing method provided by the present application, specifically including steps S701-S706:

S701. Receive a device discovery request sent by a sending end, and generate request response information according to the device discovery request;

S702. Determine, according to a sending end identifier corresponding to the device discovery request, whether the sending end blocks the request response information;

S703. If the sending end blocks the request response information, update the request response information according to the sending end identifier and a preset blocking rule;

S704. Send the updated request response information to the sending end corresponding to the sending end identifier to establish a connection with the sending end.

Specifically, for the specific implementation of steps S701-S704, reference may be made to the description in any of the above embodiments.

S705. If feedback information corresponding to the updated request response information from the sending end is received, setting the sending end identifier, and a field type and an update field value corresponding to the updated request response information, as a non-blocking relationship group, and updating the preset blocking rule with the non-blocking relationship group.

Specifically, if the receiving end receives feedback information for the updated request response information from the sending end, it indicates that the sending end has not blocked the request response information. In this case, the field corresponding to the field type in the request response information is extracted as a non-blocking field value. The field type, the corresponding non-blocking field value, and the sending end identifier are associated to form a relationship group, which is used to update the preset blocking rule. It should be noted that this update is performed when the preset blocking rule does not store a non-blocking field value of any field type corresponding to the sending end identifier, or when the formed relationship group does not already exist in the preset blocking rule.

S706. If feedback information corresponding to the updated request response information from the sending end is not received, setting the sending end identifier, and the field type and the update field value corresponding to the updated request response information, as a blocking relationship group, and updating the preset blocking rule with the blocking relationship group.

Specifically, if the receiving end does not receive feedback information for the updated request response information from the sending end, it indicates that the updated request response information is also blocked. In this case, an update field value is re-determined according to any of the above embodiments to re-update the request response information, and the information is resent. At the same time, the corresponding field type and update field value are extracted from the blocked updated request response information, set as a blocking relationship group, and used to update the preset blocking rule.

It should be noted that for a given sending end identifier, a certain field type can correspond to multiple blocking field values or multiple non-blocking field values of the same field type. That is, for one sending end identifier, a certain field type can correspond to multiple blocking fields. For example, for one sending end identifier and a manufacturer type, the corresponding blocking fields can include Manufacturer A, Manufacturer B, and so on.

In some embodiments of the present application, a situation may arise where, after the receiving end receives the device discovery request and obtains the corresponding request response information and sending end identifier, it is determined based on the preset blocking rule that the sending end does not block the request response information (e.g., the fields in the request response information match the non-blocking fields in a target non-blocking relationship group in the whitelist for that sending end identifier). However, after sending the request response information, no feedback is received from the sending end. This may occur if the sending end's blocking rules have been updated. In this case, the target non-blocking field value in the whitelist for that sending end identifier can be updated to a blocking field value based on the request response information, thereby generating the blocking relationship group and the non-blocking relationship group corresponding to the sending end identifier.

This solution enables real-time updates to the preset blocking rule, thereby ensuring its accuracy.

Further, in one embodiment of the present application, after the receiving end sends the updated request response information to the sending end corresponding to the sending end identifier, the receiving end, based on information such as the M-SEARCH request response, device description file, and service description file in the request response information, and according to the request response information, creates a connection with the sending end. Further, the sending end sends the data of the device to be sent to the receiving end for transmission.

For example:
(1) The sending end creates a screen mirroring link with the receiving end according to the request response information, and the sending end sends the video address information and video playback time point of the video to be screen-mirrored to the receiving end through the screen mirroring link;
(2) The receiving end obtains the video address information and the video playback time point sent by the sending end;
(3) Perform screen mirroring playback for a video corresponding to the video address information according to the video playback time point.

In this solution, some Digital Living Network Alliance (DLNA) sending ends, for certain reasons, may extract feature identifier information of the receiving end based on information such as the M-SEARCH request response in Simple Service Discovery Protocol (SSDP), the device description file, and the service description file. This feature identifier information may include SERVER information in the M-SEARCH request response, manufacturer information in the device description file, etc. Then, based on this feature identifier information, they perform special processing on the receiving end, such as device blocking. There may be multiple such sending ends, and the blocking rule of each sending end may be different. They might perform specified blocking processing based on a certain set of feature identifiers of the receiving end, or they might perform specified non-blocking processing, and the sending end may dynamically update the blocking rules. The present invention provides that during the DLNA device discovery phase, when the receiving end receives a device discovery request from a sending end, if the sending end has a specified blocking rule for the receiving end, the receiving end can dynamically change the information in the SSDP M-SEARCH request response, the Simple Object Access Protocol (SOAP) device description file, and the SOAP service description file that can be used as the receiving end's feature identifiers, so as to circumvent the information used by the sending end as the basis for the specified blocking rule. If the sending end has a specified non-blocking rule for the receiving end, the receiving end can specifically return the feature identifier information in each request response to simulate a receiving end that is specified by the sending end not to be blocked. When the receiving end faces multiple sending ends and repeated device discovery requests from each sending end, the device UUID information within the USN information in the M-SEARCH request response and the UDN information (i.e., device UUID information) in the device description file remain unchanged, and the receiving end alternately returns different feature identifier information of the two types mentioned above in each response. If the M-SEARCH request, device description file request, or service description file request includes information that can identify the sending end, such as User-Agent, the receiving end can execute corresponding anti-blocking rules for different sending ends. The specified blocking rules and specified non-blocking rules of the sending end for the receiving end can be maintained and updated through dynamic configuration in the cloud. The above method can effectively prevent the sending end from identifying and actively blocking the receiving end, without affecting the normal device discovery behavior of the sending end for the same receiving end. This greatly improves the user's perception of the success rate, stability, and compatibility of discovering the receiving end device, thereby improving the quality of the receiving end.

An embodiment of the present application provides a device connection processing method. The method includes: receiving a device discovery request sent by a sending end, and generating request response information according to the device discovery request; determining, according to a sending end identifier corresponding to the device discovery request, whether the sending end blocks the request response information; if the sending end blocks the request response information, updating the request response information according to the sending end identifier and a preset blocking rule; and sending the updated request response information to the sending end corresponding to the sending end identifier to establish a connection with the sending end. In this solution, by performing a blocking check on the request response information during the device discovery phase, if the request response information is blocked, the request response information is updated according to the sending end identifier and the preset blocking rule. Further, the updated request response information is sent to the sending end corresponding to the sending end identifier to attempt a request response corresponding to the device discovery request, thereby establishing a connection with the sending end. That is, when the sending end blocks the request response information, the request response information is dynamically updated, and an attempt is made to establish a connection with the sending end based on the updated request response information. This prevents the receiving end device from being undiscoverable due to being blocked, thereby improving the device connection success rate.

To better implement the device connection processing method in the embodiments of the present application, on the basis of the device connection processing method, an embodiment of the present application also provides a device connection processing apparatus. As shown in FIG. 8, the device connection processing apparatus includes modules 801-804:
a receiving module 801, configured to receive a device discovery request sent by a sending end, and generating request response information according to the device discovery request;
a determining module 802, configured to determine, according to a sending end identifier corresponding to the device discovery request, whether the sending end blocks the request response information;
an updating module 803, configured to, if the sending end blocks the request response information, updating the request response information according to the sending end identifier and a preset blocking rule;
a sending module 804, configured to send the updated request response information to the sending end corresponding to the sending end identifier, to connect with the sending end.

In some embodiments of the present application, the determining module 802 is configured to determine, according to the sending end identifier corresponding to the device discovery request, whether the sending end blocks the request response information, and is specifically configured to:
obtain the sending end identifier corresponding to the device discovery request;
search the preset blocking rule to obtain a target blocking relationship group comprising the sending end identifier, wherein the target blocking relationship group comprises a target blocking field value corresponding to the sending end identifier, and a field type corresponding to a blocking field value;
if the request response information comprises the target blocking field value, determining that the sending end blocks the request response information.

In some embodiments of the present application, the preset blocking rule includes at least one non-blocking relationship group, wherein one said non-blocking relationship group includes an end identifier, a field type, and a non-blocking field;
the updating module 803 is configured to, if the sending end blocks the request response information, update the request response information according to the sending end identifier and the preset blocking rule, and is specifically configured to:
if the sending end blocks the request response information, searching the non-blocking relationship group;
if a non-blocking field value matching the sending end identifier exists in the non-blocking relationship group, determining a target non-blocking field value according to a field type of the non-blocking field value, and setting the target non-blocking field value as an update field value; and
update the target blocking field value in the request response information to the update field value corresponding to the field type, to obtain the updated request response information.

In some embodiments of the present application, after searching the preset blocking rule, the determining module 802 is further configured to:
if the target blocking relationship group corresponding to the sending end identifier is not obtained, sending the request response information to the sending end corresponding to the sending end identifier; and
if feedback information corresponding to the request response information from the sending end is not received after a preset duration, determining that the sending end blocks the request response information.

In some embodiments of the present application, after the sending module 804 sends the updated request response information to the sending end corresponding to the sending end identifier, it is further configured to:
if feedback information corresponding to the updated request response information from the sending end is not received, randomly generate an update field value according to a field type of a field in the request response information; and
send the request response information updated according to the update field value to the sending end corresponding to the sending end identifier.

In some embodiments of the present application, the apparatus further includes an updating module. After the sending module 804 sends the updated request response information to the sending end corresponding to the sending end identifier, the updating module is configured to:
if feedback information corresponding to the updated request response information from the sending end is received, set the sending end identifier, and a field type and an update field value corresponding to the updated request response information, as a non-blocking relationship group, and updating the preset blocking rule with the non-blocking relationship group; and
if feedback information corresponding to the updated request response information from the sending end is not received, set the sending end identifier, and the field type and the update field value corresponding to the updated request response information, as a blocking relationship group, and updating the preset blocking rule with the blocking relationship group, wherein the blocking relationship group comprises a target blocking relationship group and the sending end identifier.

In some embodiments of the present application, the apparatus further includes a screen mirroring module. After the sending module 804 sends the updated request response information to the sending end corresponding to the sending end identifier to establish a connection with the sending end, the screen mirroring module is configured to:
obtain video address information and a video playback time point sent by the sending end; and
perform screen mirroring playback for a video corresponding to the video address information according to the video playback time point.

An embodiment of the present application provides a device connection processing apparatus, including: a receiving module, configured to receive a device discovery request sent by a sending end, and generate request response information according to the device discovery request; a determining module, configured to determine, according to a sending end identifier corresponding to the device discovery request, whether the sending end blocks the request response information; an updating module, configured to, if the sending end blocks the request response information, update the request response information according to the sending end identifier and a preset blocking rule; and a sending module, configured to send the updated request response information to the sending end corresponding to the sending end identifier to establish a connection with the sending end. In this solution, by performing a blocking check on the request response information during the device discovery phase, if the request response information is blocked, the request response information is updated according to the sending end identifier and the preset blocking rule. Further, the updated request response information is sent to the sending end corresponding to the sending end identifier to attempt a request response corresponding to the device discovery request, thereby establishing a connection with the sending end. That is, when the sending end blocks the request response information, the request response information is dynamically updated, and an attempt is made to establish a connection with the sending end based on the updated request response information. This prevents the receiving end device from being undiscoverable due to being blocked, thereby improving the device connection success rate.

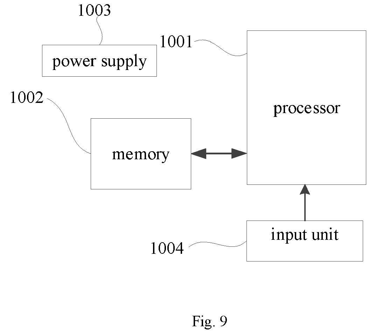

On the basis of the above embodiments, an embodiment of the present invention also provides an electronic device, as shown in FIG. 9. FIG. 9 is a schematic structural diagram of an embodiment of an electronic device provided in an embodiment of the present application.

The electronic device includes:
one or more processors;
a memory; and
one or more application programs, wherein the one or more application programs are stored in the memory and configured to be executed by the processor to perform the steps in the device connection processing method of any of the embodiments of the device connection processing method described above.

Specifically, the electronic device may include components such as a processor 1001 with one or more processing cores, a memory 1002 with one or more computer-readable storage media, a power supply 1003, and an input unit 1004. A person skilled in the art can understand that the structure of the electronic device shown in FIG. 9 does not constitute a limitation on the electronic device, and it may include more or fewer components than shown, or combine certain components, or have a different arrangement of components. Wherein:

The processor 1001 is the connection processing center of the device, connecting various parts of the entire electronic device through various interfaces and lines. By running or executing software programs and/or modules stored in the memory 1002, and calling data stored in the memory 1002, it performs various functions and processes data of the electronic device, thereby monitoring the electronic device as a whole. It can be understood that the processor 1001 transmits signals with a controller. Optionally, the processor 1001 may include one or more processing cores. Preferably, the processor 1001 may integrate an application processor and a modem processor, wherein the application processor mainly handles the operating system, user interface, and application programs, and the modem processor mainly handles wireless communication. It can be understood that the aforementioned modem processor may also not be integrated into the processor 1001.

The memory 1002 can be used to store software programs and modules. The processor 1001 executes various functional applications and data processing by running the software programs and modules stored in the memory 1002. The memory 1002 may mainly include a program storage area and a data storage area. The program storage area may store an operating system, application programs required for at least one function (such as a sound playback function, an image playback function, etc.), and so on. The data storage area may store data created according to the use of the electronic device, and so on. In addition, the memory 1002 may include a high-speed random access memory, and may also include a non-volatile memory, such as at least one disk storage device, flash memory device, or other volatile solid-state storage device. Accordingly, the memory 1002 may also include a memory controller to provide the processor 1001 with access to the memory 1002.

In some embodiments of the present application, the device connection processing apparatus may be implemented in the form of a computer program, which can run on the electronic device as shown in FIG. 9. The memory of the electronic device may store various program modules that constitute the device connection processing method apparatus, for example, the receiving module 701, the determining module 702, the updating module 703, and the sending module 804 shown in FIG. 8. The computer program composed of the various program modules enables the processor to execute the steps in the device connection processing method of the various embodiments of the present application described in this specification.

For example, the electronic device shown in FIG. 9 can execute step S201 through the receiving module 701 in the device connection processing method apparatus as shown in FIG. 8. The electronic device can execute step S202 through the determining module 702. The electronic device can execute step S203 through the updating module 703. The electronic device can execute step S204 through the sending module 804. The electronic device includes a processor, a memory, and a network interface connected via a system bus. Wherein, the processor of the electronic device is used to provide computing and control capabilities. The memory of the electronic device includes a non-volatile storage medium and an internal memory. The non-volatile storage medium stores an operating system and computer programs. The internal memory provides an environment for the operation of the operating system and computer programs in the non-volatile storage medium. The network interface of the electronic device is used for communicating with external electronic devices via a network connection. The computer program, when executed by the processor, implements a device connection processing method.

The electronic device further includes a power supply 1003 for supplying power to various components. Preferably, the power supply 1003 may be logically connected to the processor 1001 through a power management system, so as to implement functions such as charging management, discharging management, and power consumption management through the power management system. The power supply 1003 may also include any component such as one or more DC or AC power sources, a recharging system, a power failure detection circuit, a power converter or inverter, and a power status indicator.

The electronic device may also include an input unit 1004. The input unit 1004 may be used for receiving input digital or character information, and generating keyboard, mouse, joystick, optical or trackball signal inputs related to user settings and function control.

Although not shown, the electronic device may also include a display unit, etc., which will not be described in detail herein. Specifically, in this embodiment, the processor 1001 in the electronic device will load an executable file corresponding to a process of one or more application programs into the memory 1002 according to the following instructions, and the processor 1001 runs the application programs stored in the memory 1002 to implement various functions, as follows:
receiving a device discovery request sent by a sending end, and generating request response information according to the device discovery request;
determining, according to a sending end identifier corresponding to the device discovery request, whether the sending end blocks the request response information;
if the sending end blocks the request response information, updating the request response information according to the sending end identifier and a preset blocking rule; and
sending the updated request response information to the sending end corresponding to the sending end identifier, to connect with the sending end.

A person of ordinary skill in the art may understand that all or some of the steps in the various methods of the foregoing embodiments may be completed by instructions, or by controlling related hardware through instructions. The instructions may be stored in a computer-readable storage medium, and loaded and executed by a processor.

To this end, an embodiment of the present invention provides a computer-readable storage medium (which may be referred to as a storage medium for short). The computer-readable storage medium may include: a Read-Only Memory (ROM), a Random Access Memory (RAM), a magnetic disk or an optical disc, etc. A computer program is stored thereon, and the computer program is loaded by a processor to execute the steps in any one of the device connection processing methods provided by the embodiments of the present invention. For example, the computer program, when loaded by the processor, can execute the following steps:
receiving a device discovery request sent by a sending end, and generating request response information according to the device discovery request;
determining, according to a sending end identifier corresponding to the device discovery request, whether the sending end blocks the request response information;
if the sending end blocks the request response information, updating the request response information according to the sending end identifier and a preset blocking rule; and
sending the updated request response information to the sending end corresponding to the sending end identifier, to connect with the sending end.

In the foregoing embodiments, the descriptions of the respective embodiments each have their own emphasis. For a part that is not described in detail in a certain embodiment, reference may be made to the detailed description of other embodiments above, which will not be repeated herein.

In specific implementation, the foregoing units or structures may be implemented as independent entities, or may be arbitrarily combined and implemented as one or several entities. For the specific implementation of the foregoing units or structures, reference may be made to the foregoing method embodiments, which will not be repeated herein.

For the specific implementation of the foregoing operations, reference may be made to the foregoing embodiments, which will not be repeated herein.

The foregoing provides a detailed description of a device connection processing method, an apparatus, an electronic device, and a storage medium provided by the embodiments of the present application. In this document, specific examples are used to explain the principles and implementation manners of the present invention. The description of the foregoing embodiments is only for helping to understand the method of the present invention and its core idea. At the same time, for a person skilled in the art, there will be changes in the specific implementation manners and application scope according to the idea of the present invention. In summary, the content of this specification should not be construed as a limitation on the present invention.

## Claims

1. A device connection processing method, executed by a receiving end, comprising:
receiving a device discovery request sent by a sending end, and generating request response information according to the device discovery request;
determining, according to a sending end identifier corresponding to the device discovery request, whether the sending end blocks the request response information;
if the sending end blocks the request response information, updating the request response information according to the sending end identifier and a preset blocking rule; and
sending the updated request response information to the sending end corresponding to the sending end identifier, to connect with the sending end.

2. The device connection processing method of claim 1, wherein the determining, according to the sending end identifier corresponding to the device discovery request, whether the sending end blocks the request response information comprises:
obtaining the sending end identifier corresponding to the device discovery request;
searching the preset blocking rule to obtain a target blocking relationship group comprising the sending end identifier, wherein the target blocking relationship group comprises a target blocking field value corresponding to the sending end identifier, and a field type corresponding to a blocking field value; and
if the request response information comprises the target blocking field value, determining that the sending end blocks the request response information.

3. The device connection processing method of claim 2, wherein the obtaining the sending end identifier corresponding to the device discovery request comprises:
parsing the device discovery request to extract the sending end identifier corresponding to the sending end.

4. The device connection processing method of claim 1, wherein the method further comprises:
creating the preset blocking rule based on device discovery information during a historical data transmission process.

5. The device connection processing method of claim 2, wherein the preset blocking rule comprises at least one non-blocking relationship group, and one of the non-blocking relationship group comprises an end identifier, a field type, and a non-blocking field value; and
the updating the request response information according to the sending end identifier and a preset blocking rule if the sending end blocks the request response information comprises:
if the sending end blocks the request response information, searching the non-blocking relationship group;
if a non-blocking field value matching the sending end identifier exists in the non-blocking relationship group, determining a target non-blocking field value according to a field type of the non-blocking field value, and setting the target non-blocking field value as an update field value; and
updating the target blocking field value in the request response information to the update field value corresponding to the field type, to obtain the updated request response information.

6. The device connection processing method of claim 5, wherein after the searching the non-blocking relationship group if the sending end blocks the request response information, the method further comprises:
when the non-blocking field value corresponding to the sending end identifier in the preset blocking rule is not identified, randomly generating a target field corresponding to each blocking field value in the request response information, and updating the target field in the request response information.

7. The device connection processing method of claim 5, wherein after the searching the preset blocking rule, the method further comprises:
if the target blocking relationship group corresponding to the sending end identifier is not obtained, sending the request response information to the sending end corresponding to the sending end identifier; and
if feedback information corresponding to the request response information from the sending end is not received within a preset duration, determining that the sending end blocks the request response information.

8. The device connection processing method of claim 1, wherein after the sending the updated request response information to the sending end corresponding to the sending end identifier, the method comprises:
if feedback information corresponding to the updated request response information from the sending end is not received, randomly generating an update field value according to a field type of a field in the request response information; and
sending the request response information updated according to the update field value to the sending end corresponding to the sending end identifier.

9. The device connection processing method of claim 1, wherein after the sending the updated request response information to the sending end corresponding to the sending end identifier, the method further comprises:
if feedback information corresponding to the updated request response information from the sending end is received, setting the sending end identifier, and a field type and an update field value corresponding to the updated request response information, as a non-blocking relationship group, and updating the preset blocking rule with the non-blocking relationship group; and
if feedback information corresponding to the updated request response information from the sending end is not received, setting the sending end identifier, and the field type and the update field value corresponding to the updated request response information, as a blocking relationship group, and updating the preset blocking rule with the blocking relationship group, wherein the blocking relationship group comprises a target blocking relationship group and the sending end identifier.

10. The device connection processing method of claim 1, wherein after the sending the updated request response information to the sending end corresponding to the sending end identifier to connect with the sending end, the method comprises:
obtaining video address information and a video playback time point sent by the sending end; and
performing screen mirroring playback for a video corresponding to the video address information according to the video playback time point.

11. A device connection processing method, executed by a sending end, comprising:
sending a device discovery request to a receiving end to cause the receiving end to generate request response information, wherein the receiving end updates the request response information upon discovering that the sending end blocks the request response information; and
obtaining the updated request response information sent by the receiving end, to connect with the receiving end.

12. The device connection processing method of claim 11, wherein the sending a device discovery request to a receiving end comprises:
based on a Simple Object Access Protocol, repeatedly initiating to the receiving end a device discovery request for the receiving end within a local area network, wherein the device discovery request comprises a sending identifier of the sending end.

13. The device connection processing method of claim 11, wherein the request response information comprises a protocol and a service information file of the receiving end, and the sending end performs data transmission with the receiving end through a DLNA protocol.

14. The device connection processing method of claim 11, wherein after the sending a device discovery request to a receiving end to cause the receiving end to generate request response information, the method further comprises:
receiving the request response information sent by the receiving end.

15. The device connection processing method of claim 11, wherein the method further comprises:
when blocking the receiving end, sending the device discovery request comprising a blocked field value to the receiving end.

16. A device connection processing apparatus, applied to a receiving end, comprising:
a receiving module, configured to receive a device discovery request sent by a sending end, and generating request response information according to the device discovery request;
a determining module, configured to determine, according to a sending end identifier corresponding to the device discovery request, whether the sending end blocks the request response information;
an updating module, configured to, if the sending end blocks the request response information, updating the request response information according to the sending end identifier and a preset blocking rule; and
a sending module, configured to send the updated request response information to the sending end corresponding to the sending end identifier, to connect with the sending end.

17. The device connection processing apparatus of claim 16, wherein the determining module is configured to determine, according to a sending end identifier corresponding to the device discovery request, whether the sending end blocks the request response information, and is specifically configured to:
obtain the sending end identifier corresponding to the device discovery request;
search the preset blocking rule to obtain a target blocking relationship group comprising the sending end identifier, wherein the target blocking relationship group comprises a target blocking field corresponding to the sending end identifier, and a field type corresponding to a blocking field value; and
if the request response information comprises the target blocking field value, determining that the sending end blocks the request response information.

18. A device connection processing apparatus, applied to a sending end, comprising:
a sending module, configured to send a device discovery request to a receiving end to cause the receiving end to generate request response information, wherein the receiving end updates the request response information upon discovering that the sending end blocks the request response information; and
an obtaining module, configured to obtain the updated request response information sent by the receiving end, to connect with the receiving end.

19. An electronic device, comprising:
one or more processors;
a memory; and
one or more application programs, wherein the one or more application programs are stored in the memory and configured to be executed by the one or more processors to implement the steps of the device connection processing method according to any one of claims 1 to 10 or 11-15.

20. A computer-readable storage medium, wherein a computer program is stored thereon, and the computer program is loaded by a processor to execute the steps of the device connection processing method according to any one of claims 1 to 10 or 11-15.
